# EUROPEAN PATENT SPECIFICATION

(11) **EP 3 546 157 B1**
(45) Date of publication and mention of the grant of the patent: **21.04.2021**
(21) Application number: 19165809.5
(22) Date of filing: 28.03.2019
(51) Int. Cl.: B26B 21/22, B26B 21/40

(54) **RAZOR MECHANISMS**
RASIERERMECHANISMEN
MÉCANISMES DE RASOIR

(30) Priority: 30.03.2018 US 201862650290 P
(43) Date of publication of application: 02.10.2019
(73) Proprietor: The Gillette Company LLC, Boston, Massachusetts 02127 (US)
(72) Inventor: MURGIDA, Matthew Frank, South Boston, Massachusetts 02127-1096 (US); CUSACK, Jessy Lee, South Boston, Massachusetts 02127-1096 (US); BRIDGES, Kelly Daniel, South Boston, Massachusetts 02127-1096 (US); FONTECCHIO, Marco, South Boston, Massachusetts 02127-1096 (US)
(74) Representative: P&G Patent Germany

(56) References cited:
- EP-A1- 1 304 196
- EP-A1- 3 486 049
- EP-A2- 3 486 048
- GB-A- 2 116 470
- US-A- 4 879 811
- US-A1- 2010 313 426
- US-A1- 2017 282 392

## Description

### FIELD OF THE INVENTION

This invention relates to personal care appliances, such as razors and shaving devices, and more particularly to springs for use in such appliances.

### BACKGROUND OF THE INVENTION

In many small consumer appliances, such as razors and shaving devices, there is a cartridge component which is permanently or removably attached to a handle. In the case of razors, the cartridge includes the cutting blades. The cartridge and the handle move relative to each other to allow the cartridge to follow the contours of the skin and cut more hairs more efficiently.

The cartridge in many commercially available razors pivots relative to the handle. The pivot mechanisms may be accomplished by a spring or spring mechanism. The pivot mechanism of the prior art generally comprises an up and down (or forward and back) movement of the cartridge relative to the handle while another pivot mechanism of the prior art may generally comprise a side to side (or left and right) movement of the cartridge relative to the handle. Some premium commercial razors incorporate both types of movement such that the cartridge can move both up and down and side to side.

US 2017/282392 A1 discloses a razor having a handle with an articulable joint intermediate the cutting blade and the portion of the handle. The joint is made of resilient elastomeric memory material so that the head of the razor may be moved from an initial position to a displaced position and back to the initial position.

US 4879811 A discloses a safety razor including a first handle for gripping by the hand of the person and a second handle carrying a blade head. The handles are hingedly connected by a hinge pin. The nested first and second handles are configured adjacent the hinge joint to give the impression of a single handle.

EP1304196 A1 discloses a razor assembly that includes a handle, a pivot member, and a cartridge. The pivot member is attached to the handle, and includes an exterior contact surface that extends along the length of the cartridge. The cartridge and the pivot member are preferably pivotal relative to one another.

GB 2116470 A discloses a safety razor comprising a handle carrying a blade head, or cartridge, including a blade member having an elongate cutting edge. The head is mounted on the handle with freedom to move about a rocking axis which is transverse to the cutting edge, and which is substantially parallel with a notional tangent plane containing the skin engaging portions of the razor head, so that the head can rock on the handle, about the axis for improved conformance to facial contours.

US 2010/313426 A1 discloses a safety razor including a handle having a grip portion and a connection portion secured to the grip portion. The connection portion rotates with respect to the grip portion about a rotational axis. The blade unit is mounted to the connection portion by a connection member. The blade unit pivots with respect to the connection member about a pivot axis substantially parallel to the at least one blade.

Springs or spring mechanisms may also be included in a component or feature that serves to remove, separate, or eject the cartridge from the handle. For instance, an eject button or release fingers can be found in a razor where the cartridge can be removed from the handle (e.g., the removable type where the cartridge is disposed of but the handle is kept by the consumer). Typically, the eject button or the release fingers have some spring or spring mechanism. The eject buttons of the prior art generally allow for the user to move the button forward from an initial point with the button typically springing back to the same initial point in the process of releasing a cartridge from a handle. This movement is generally along a linear path. Generally, the travel distance that an eject button of the prior art travels is about 1 mm to about 2 mm.

Many current razors use coil springs or straight springs (e.g., a straight beam) to assist in the eject or pivot functionality. These springs generally occupy a lot of volume and their short length does not allow for large deflections, bending, or long travel distances without exceeding the yield stresses and strains of the spring. If an increase in user benefits is desired in the razor which would require space, the spring members of the prior art may be inadequate due to fatigue or permanent deformation.

Further, the springs of the prior art are generally separated per function, such that there is typically a spring utilized for pivot movement and a different one for eject movement.

Often, if a razor is accidentally dropped, many components of the razor may be damaged. For instance, the cartridge or blades may bend or fall out of place, the eject button may not be able to move appropriately thereafter, or the spring or spring mechanism helping pivot or eject functions may be compromised. Subsequently, the razor may become unsafe for a consumer to use.

Thus, the prior art springs and spring mechanisms have some disadvantages in cost, size, shape, capability, and complexity. First, in many prior art devices, as mentioned above, having separate springs for different razor functions such as pivoting and ejection, adds components and thus cost and complexity to the device. In some instances, when additional benefits are added to the razor, the current springs or spring mechanisms may be inappropriate. Further, the spring capabilities and the eject function may diminish with use and with accidental drops.

A robust and improved spring member and spring mechanism and components to provide desired functionalities in a razor is needed which also provide the consumer with a much more pleasant operational experience.

### SUMMARY OF THE INVENTION

The present invention is directed to a razor which includes a cartridge, a handle coupled to the cartridge, a loop shaped spring member disposed in an assembly, the assembly having one or more movable portions wherein the one or more movable portions provide an angular rotation of the handle to the cartridge. Said loop shaped spring member has overlapping end portions. In one aspect, the cartridge and the handle pivot relative to each other.

In an embodiment, the loop shaped spring member includes a circular, oval, elliptical, ring shape, modified V-shape, tear drop shape, or any combination thereof. The loop shaped spring member has an overall length of about 30 mm to about 90 mm when straightened. The loop shaped spring member has radii of curvature between about 1 mm to about 12 mm. The loop shaped spring member includes distal ends which are spaced apart. According to the invention the loop shaped spring member has overlapping end portions. The first and second distal ends of the loop shaped spring member contact first and second stop walls of the assembly when the assembly is in a rest position. The one or both distal ends of the loop shaped spring member move away from one or more stop walls of the assembly during the angular rotation.

The angular rotation is up to 30 degrees from a center of the assembly. A stiffness coefficient of the angular rotation about the second axis is about 0.0833 N-mm/degree per unit distance from the first axis to the second axis.

In one embodiment, the loop shaped spring member is fully encompassed within the assembly.

The razor further includes a skin interconnect member.

In one aspect, the loop shaped spring member is made of a stainless steel. In another, the loop shaped spring member is made of flat wire.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. In addition, the materials, methods, and examples are illustrative only and not intended to be limiting.

Other features and advantages of the invention will be apparent from the following detailed description, and from the claims.

### BRIEF DESCRIPTION OF THE DRAWINGS

While the specification concludes with claims particularly pointing out and distinctly claiming the subject matter which is regarded as forming the present invention, it is believed that the invention will be better understood from the following description which is taken in conjunction with the accompanying drawings in which like designations are used to designate substantially identical elements, and in which:
FIGs. 1-6 are schematics of various embodiments of loop spring members in accordance with the present disclosure, wherein some of these embodiments do not fall within the scope of the claims.
FIGs. 7A and 7C are depictions of a razor comprising spring mechanisms of the present invention.
FIG. 8A-F depicts stages of a movable member assembly of the present invention.
FIG. 9A-9F depicts stages of a movable member assembly of the present invention.
FIG. 9G-9H depicts loop shaped spring members of FIGs. 8 and 9.
FIG. 10A-10C depicts stages of a movable member assembly in a backwards direction of the present invention.
FIG. 10D-10H depicts loop shaped spring members of FIGs. 8-10.
FIG. 11A is a schematic semi-transparent top view of a razor portion having a first movable member assembly depicting an eject button assembly with a spring member in accordance with the present invention.
FIG. 11B is a schematic semi-transparent top view of a razor portion having a first movable member assembly depicting an eject button assembly with a spring member under force in accordance with the present invention.
FIG. 11C is a side view of the eject button movable member assembly relative to a razor cartridge in accordance with the present invention.
FIG. 12A-D depicts schematic views of a second movable member assembly having a pivot functionality with a spring member which does not fall within the scope of the claims.
FIG. 13A-C depicts schematic views of a second movable member assembly having a pivot functionality with a spring member in a pivot movement wherein the spring member does also not fall within the scope of the claims.

### DETAILED DESCRIPTION OF THE INVENTION

The novel spring members or spring mechanisms of the present invention are described herein. A loop-shaped spring member of the present invention provides many advantages in a razor. For instance, the eject functionality of many razors includes a button that is moved forward a travel distance to reach a component or surface of the cartridge to eject or release a cartridge from a handle. The eject button may need to travel a long travel distance (e.g., a long ejection stroke) to reach the cartridge and a long distance to return to a rest position. A long distance may be a distance greater than 2.5 mm and usually in the 4 mm to 10 mm range. The eject button in many razors is disposed in a small space in the razor. The spring member of the present invention having a loop shape provides many advantages to a razor with eject mechanisms. For one, the loop shape allows extension and compression to occur without exceeding the yield strains and stresses of the spring member. The fatigue of the spring member is reduced. The loop shape also allows large extension and compression with low forces that are consumer acceptable while providing enough force to return the eject button to its rest position reliably. The loop shape can be configured in a variety of sizes that provide design flexibility. The loop shape enables the spring functionality to be placed at the periphery of the eject button, advantageously leaving other areas including the center of the eject button available for other functionality.

Additionally, many razors have spring members to provide pivot functionality. Many razors use coil springs or straight springs (e.g., a straight beam) to assist in the pivot functionality. These springs generally occupy a lot of volume and their short length does not allow for large deflections, bending, or long travel distances without exceeding the yield stresses of the spring. When pivoting about 12 or more degrees in either direction, if the spring length is shorter, the stress on the spring, and in particular at a location where it is fixed, can be large and the spring may permanently deform. The longer the spring or beam, as in the present invention, the more the amount of deflection can be distributed across the beam. Accordingly, the loop shape spring member of the present invention not only generally takes up a small volume or less critical volume than the coil or straight spring due to its length being formed into a circle, but also it provides enhanced beam bending due to its longer length and reduces fatigue on the spring. Further, as noted above, by having the spring form into a loop shape at a periphery of an assembly, extra space is provided for other functionality to be disposed therein including, but not limited to, a benefit delivery system, or other enhancements for a user.

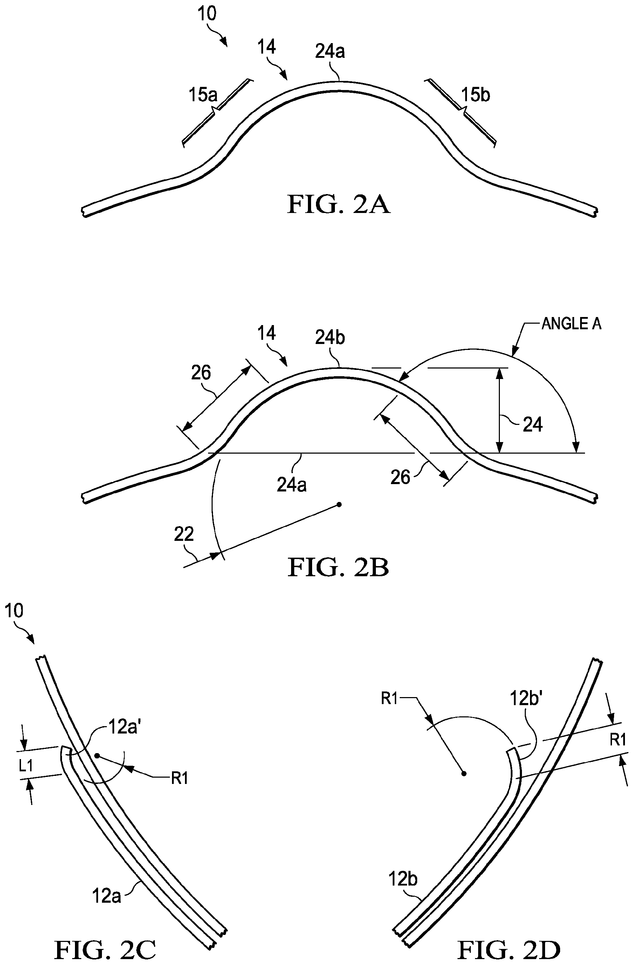

The spring mechanisms of the present invention can be advantageous for a non-limiting embodiment of a razor which includes an interconnect member flanked by a cartridge and handle where the interconnect member can provide benefits to a consumer's skin. Such a skin interconnect member (reference 75 in FIG. 2. 7C can be disposed on the razor handle and can be in a pivotal relationship to the main body of the handle and this structure can be joined or fixed to the razor cartridge.

Having a pivoting skin interconnect member in an area very close to the razor cartridge presents numerous challenges which are mitigated with the spring member and mechanisms of the present invention. By having an interconnect member so close to the cartridge, an area typically devoted to providing ejection and pivoting functionalities, the location of one or both eject and pivoting mechanisms would necessarily be relocated, e.g., disposed further back on the handle. For instance, where current eject members, to force detachment of a razor cartridge, typically travel distances of about 1 mm to about 2 mm to detach a razor cartridge, a razor having a skin interconnect member which may be located from about 2.5 mm to about 8 mm away from the razor cartridge, typically about 3 mm away, would, to detach the cartridge, need to travel a distance from about 3 mm to about 10 mm of travel, typically about 5 mm. This long distance of travel requires a spring mechanism capable of adequately returning the moving member of the cartridge eject mechanisms to the rest position. The loop shaped spring member of the present invention achieves the long travel needed to maintain low stresses during use to avoid permanent deformation or fatigue failure while also providing such travel with low forces exerted by consumer.

The spring mechanism of the present invention is desirably disposed in an assembly or a member of a razor, preferably in a movable member in the assembly. The spring mechanism of the present invention is disposed within a movable member assembly.

A "movable member" or "movable member assembly" as used herein signifies a member on the razor comprising one or more movable portions capable of moving or providing a motion functionality for the razor. For instance, the movable member assembly of the present invention may preferably be a pivot mechanism (e.g., angular or rotational motion, side to side motion) or a release or ejection mechanism or a combination thereof.

The term "spring", "spring mechanism", or "spring member" as used herein, signifies any type of mechanical spring, such as a compression spring, a leaf spring, or any feasible spring or combination thereof.

The spring member of the present invention generally has a loop shape or a modified V-shaped loop spring as will be described below.

Any loop shaped spring member of the present invention, when straightened, desirably has an overall length of about 30 mm to about 90 mm and preferably about 65 mm.

The spring mechanism of the present invention is based on an interaction between a movable member in an assembly attached to the cartridge or handle of the razor and the spring member. During the pivot or eject functions, the spring member offers a resistance that is a function of its preload compression, its spring constant and the geometry of the bottom structure, and depending on the intensiveness of that resistance, the effect will be larger or smaller.

The term "loop" as used herein signifies a generally curved, circular shape, which may form a loop. Non-limiting loops of the present invention comprise oval, circle, elliptical, ring shape, modified V-shape, tear drop shape, or any modification or combination thereof. The loop may be split and the loop itself, the end portions or distal ends of the loop can be unconnected or free, unsupported, connected or mounted, or overlap each other. The distal ends can be facing towards each other or can be facing away from each other.

The loop of a loop spring member of the present invention desirably has radii of curvature ranging from about 1 mm to about 12 mm and more preferably about 7.5 mm. The loop diameter can be from about 10 mm to about 25 mm, preferably about 15 mm. Generally, the size of the loop spring member is such that it may fit on a person's fingertip.

The spring member of the present invention may also preferably include one or more retarding structures such as a knob or point. The terms "knob", "protrusion", "recess", "notch", "divot", or "point" as used herein may signify any size structure of any geometrical shape, e.g., having a curved, rounded, or linear profile or any feasible combination thereof.

The term "angled" as used herein may signify a surface that has an angle or angles, is disposed at a slant or bent at an angle, which may or may not be linear.

The term "flat" or "flat areas" as used herein may signify a surface that is horizontally level, generally not slanted, even, or without marked projections or depressions.

The type of material chosen for the spring member is generally important for its ability to provide a flexible or elastic performance. In addition, the spring is desirably comprised of metal to provide a durable, long-lasting spring member. The spring member of the present invention is preferably comprised of stainless steel.

In one embodiment, the spring is comprised of any type of hard metal. In a preferred embodiment, the spring member is comprised of stainless steel. The stainless steel of the spring member of the present invention desirably has an engineering yield stress of about 800 MPa to about 2200 MPa, preferably between about 1000 MPa to 2080 MPa, and more preferably about 1000 MPa to about 1600 MPa. The type of material of the spring member of the present invention is a stainless steel defined by 301 Super Full Hard Temper. The engineering yield stress is determined by the ASTM standard E8 using a 0.2% off-set method. Preferably, the spring of the present invention is comprised of a flat wire as opposed to a slit strip to avoid slitting burr on the edges of the component.

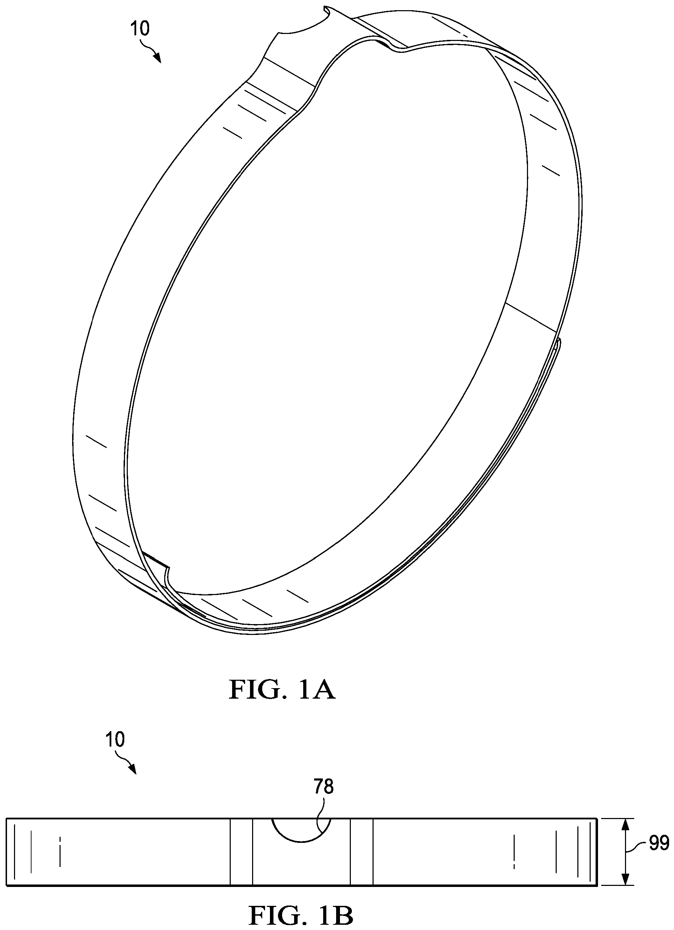

Referring to FIG. 1A-D, an exemplary spring member 10 in accordance with the present invention is shown. As shown, spring member 10 is a generally circular shape with end portions 12a and 12b. End portion 12a includes a distal end 12a' and end portion 12b includes a distal end 12b'. Distal ends 12a' and 12b' are free ends. End portions 12a and 12b are not joined together and distal ends are not joined together. End portions 12a and 12b overlap forming an overlapping portion 13.

The spring member 10 has a thickness 98 of about 0.05 mm to about 0.25 mm, and preferably about 0.10 mm; a height 99 of about 1.0 mm to about 4.0 mm, and preferably about 1.7 mm; and a radius of curvature 79 along the loop of about 1 mm to about 12 mm, and preferably about 7.5 mm.

The overlapping portion 13 is desirably curved and generally encompasses approximately 90 degrees of a 360-degree circle, assuming the spring member to be effectively a full circle. The overlapping portion may alternately be larger or smaller. The overlapping portion 13, when straightened out, has a length of about 5 mm to about 40 mm, and preferably about 16 mm.

At least one knob is preferably disposed anywhere on the spring member of the present invention. As shown in FIG. ID, the knob 14 extends outward from the overall circumference 11 of the loop of the spring member 10. The knob 14 is disposed substantially directly opposite or across from the end portions or the overlapping portion 13. The knob 14 may preferably be disposed substantially across from a center point 13a or area of the overlapping portion 13.

The knob 14, as shown, has a curved profile 14'. The knob 14 is also shown as having angled side portions 15a and 15b. The function of the knob is to assist in retarding or preventing spin or full movement of the spring member at the location of the knob as it sits within a razor bottom structure. This function will be described in more detail below.

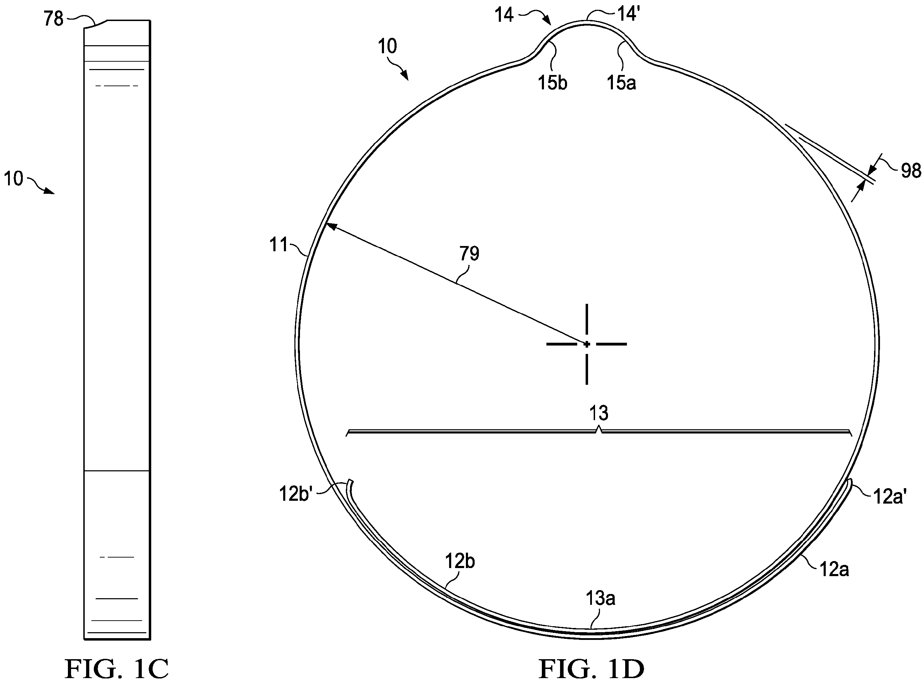

FIG. 2 depicts one embodiment of the geometry of the knob 14 of the spring member 10 of FIG. 1 which desirably provides optimal functionality.

As indicated in FIG. 2, a radius of curvature 22 of the knob 14 may preferably be in the range of about 0.5 mm to about 4 mm, and more preferably about 1.5 mm.

In addition, an optimal length 26 for each angled side portion 15a and 15b ranges from about 0.5 mm to about 5 mm, and preferably about 1.0 mm. Angle A ranges from 80 degrees to 150 degrees and is preferably about 135 degrees. Any feasible length for the side portions is contemplated by the present invention. Angled side portions 15a and 15b are generally desirably symmetrical, though asymmetrical portions are also contemplated in the present invention.

A height 24 of the knob may preferably be determined from a bottom point 24a of the knob 14 (where the knob joins the circle loop of the spring member 10) to a highest point 24b of the curved profile 14'. The desired knob height 24 is in the range of about 0.5 mm to about 2.0 mm, and more preferably at about 0.9 mm.

The knob and the angled side portions may desirably each have one or more cutouts or apertures 78. While not required for the present invention, apertures may generally provide some advantages such as homogenizing the strength on the angled portions during the compression of the spring member, providing an extra locking or retention feature, and providing a guiding feature for manufacturing.

FIG. 2C-D depicts close-up views of the distal ends 12a' and 12b'. As shown, the distal ends are curved. In a non-limiting embodiment, they may be curved inward or into the center of the loop as shown. The curved nature of the distal ends provides for ease of motion of the loop spring member overall (e.g., under compression and tension) without jamming or sticking into itself or other features in the razor. Typical radii of curvature R1 for the distal ends ranges from 0.25 mm to 5 mm, preferably about 0.4 mm. Typical lengths L1 of the distal ends range from 0.2 mm to 1 mm, preferably about 0.3 mm.

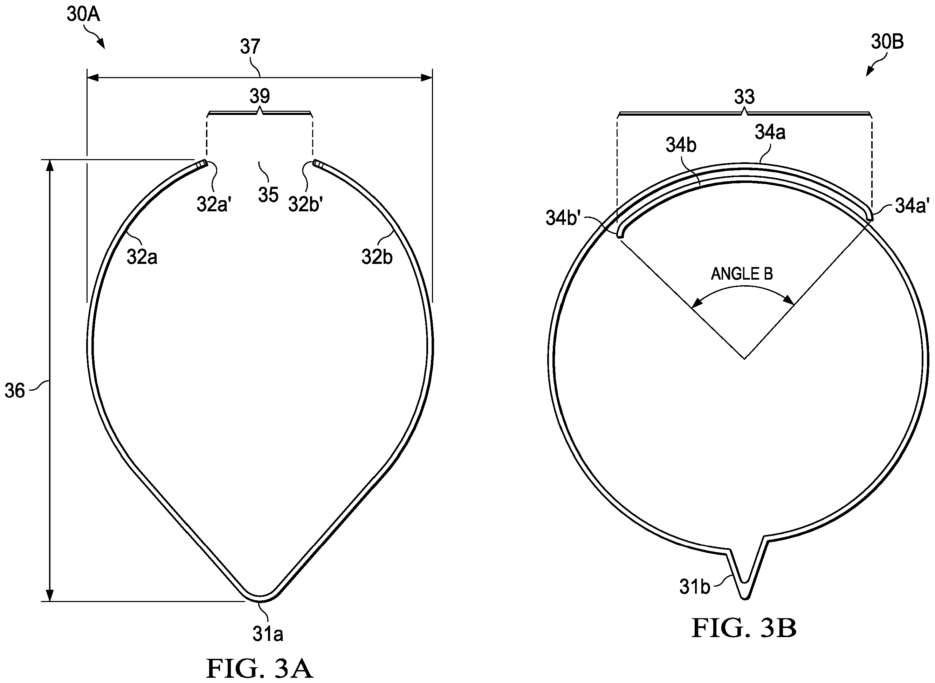

Other embodiments of spring members are contemplated in the present disclosure. For example, in FIG. 3A-B, the shape of the spring members 30a and 30b is a loop shape having a modified V-shape or tear drop shape, as opposed to the more circular shape of FIG. 1A. Spring member 30a has loop end portions 32a and 32b with distal ends 32a' and 32b' respectively. While the end portions 32a and 32b with distal ends 32a' and 32b' are not joined or connected together, they also do not overlap. End portions 32a and 32b can be spaced apart by about 5.00 mm or approximately by about 60 to about 90 degrees of a 360-degree circle as shown by gap 39 in FIG. 3A. In a non-limiting embodiment of the invention, the length 36 of spring member 30a can range from about 10 mm to about 40 mm, and more preferably be about 21 mm. In a non-limiting embodiment, the width 37 of spring member 30a can range from about 10 mm to about 40 mm, and more preferably be about 18 mm. When straightened the length of the spring member may range from about 30 mm to about 90 mm.

Spring member 30b has loop end portions 34a and 34b with distal ends 34a' and 34b' respectively. While the end portions 34a and 34b with distal ends 34a' and 34b' are not joined together, they do overlap. The overlapping portion 33 encompasses the area where the two end portions overlap. The overlapping portion 33 is desirably curved and generally encompasses an Angle B up to about approximately 180 degrees of a 360-degree circle, and preferably about 90 degrees assuming the spring member to be effectively a full circle. Alternatively, if feasible, the overlapping portion may be larger or smaller. The overlapping portion 33, when straightened out, desirably has a length of about 5 mm to about 30 mm, and preferably about 15.5 mm.

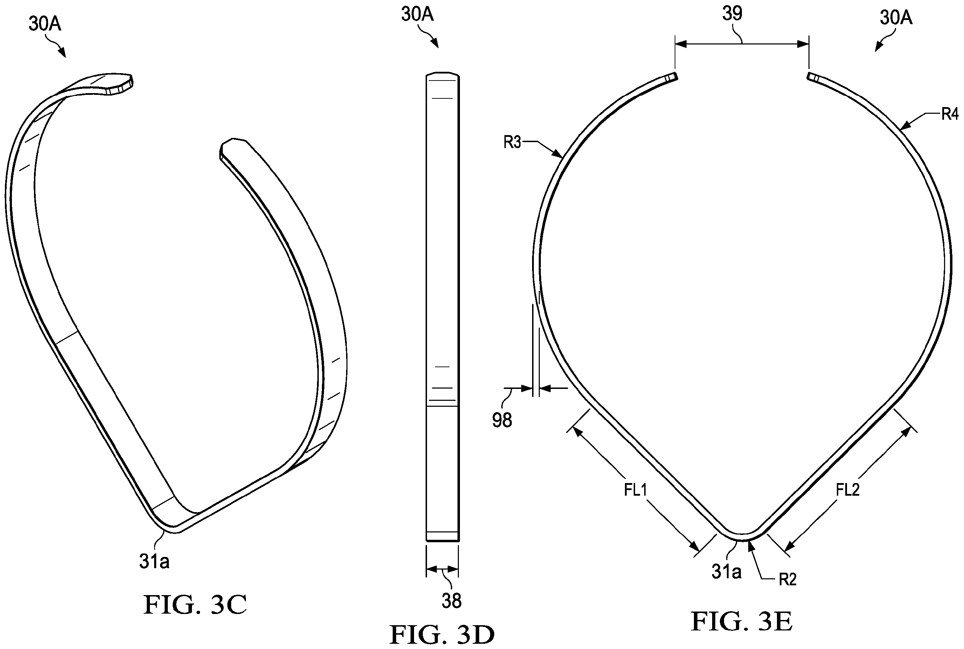

Spring members 30a and 30b of FIG. 3 can comprise a small curved profile, notch, pointed portion or protrusion as shown by 31a and 31b. The notches 31a and 31b both extend outwardly but could also extend inwardly (not shown). As with FIG. 1, the notches 31a and 31b are disposed substantially opposite the overlapping portion 33 (in the case of spring member 30b) and opposite the center 35 of the gap 39 between distal ends 32a' and 32b' in spring member 30a (in the case of spring member 30a).

As shown in FIGs. 3A-3C, the spring member 30a may have a height 38 ranging from about 1.00 mm to about 3 mm, and preferably about 1.7 mm. In a non-limiting preferred embodiment of the invention, the height 38 of the spring member is uniform throughout the loop. The thickness 98 of the spring member 38 can be about 0.05 mm to about 0.25 mm and preferably about 0.1 mm. A radius of curvature R2 of the protrusions 31a may be about 1.0 to about 2.0 mm, and preferably about 1.53 mm. A radius of curvature R3 and R4 of the end portions may be about 5.0 mm to about 15.0 mm, and preferably about 8.95 mm. The radius of curvature R2 and R3 can be the same value or can be different values. Flat areas FL1 and FL2 generally converge toward the protrusion 31a from either side. The length of these flat areas may range from about 6 mm to about 9 mm, and preferably be about 7.95 mm. In a non-limiting embodiment, FL1 and FL2 are the same value.

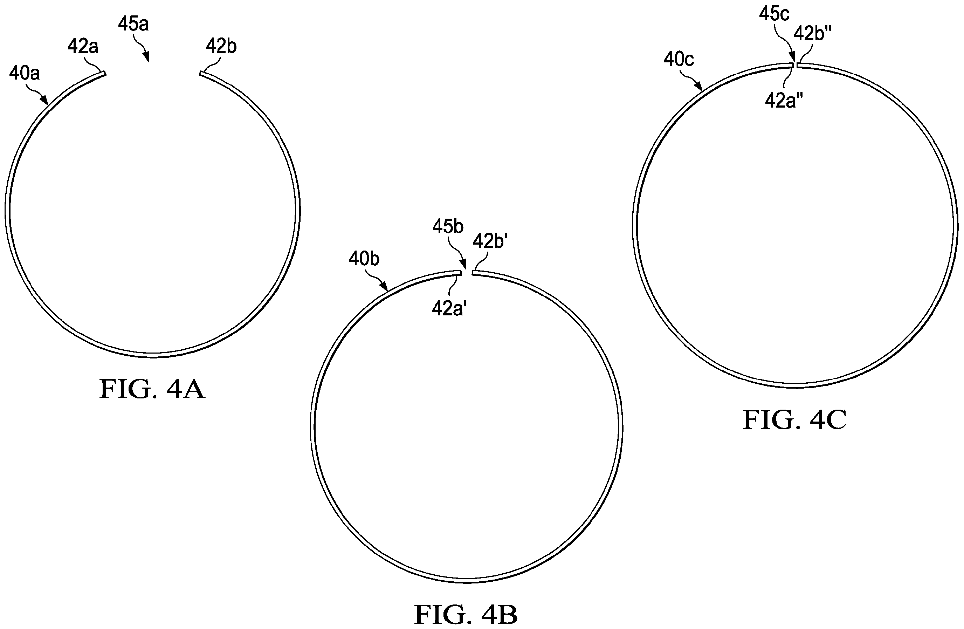

Turning to FIGs. 4A-C, circular loop spring members 40a, 40b, and 40c that are split in that, as shown, distal ends have a gap between them of varying sizes such that the end portions and distal ends do not overlap and are also not joined. Spring member 40a has the largest gap 45a between distal ends 42a and 42b followed by spring member 40b which has a medium sized gap 45b between distal ends 42a' and 42b' and then by spring member 40c which has a very small gap 45c between distal ends 42a" and 42b". Though not limited to these shown embodiments, there are no knobs or notches or other protrusions disposed on the spring members 40a, 40b, and 40.

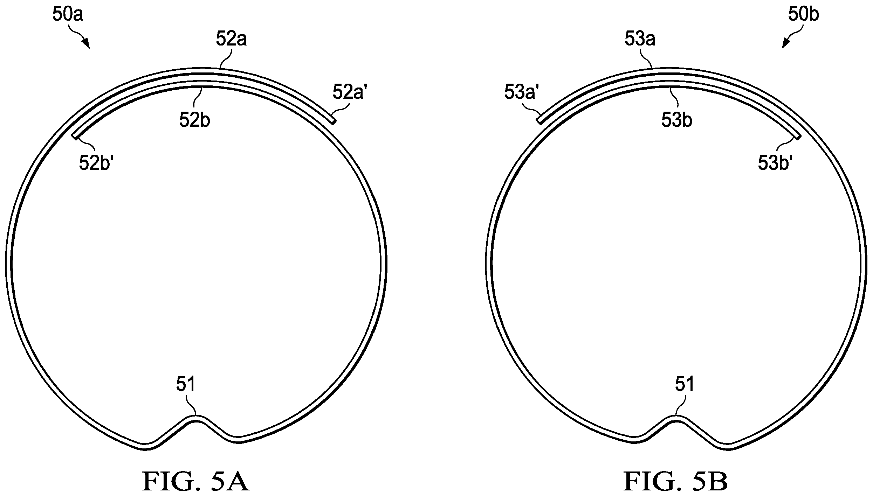

The protrusion of the present invention may alternatively extend inwardly as shown in FIG. 5A-B where knobs 51 are shown to extend internal to both loop spring members 50a and 50b. The geometry, dimensions, and functionality of knobs 51 would substantially be the same as that of knob 14 of FIGs. 1 and 2.

It should be noted that spring member 50a has a similar arrangement of end portions and distal ends as the spring member 10 of FIG. 1 in that, in spring member 50a of FIG. 5, the end portion 52a sits over or overlaps end portion 52b and the end portion 52b is disposed underneath end portion 52a such that the distal end 52a' faces to the right of the page and such that the distal end 52b' faces to the left of the page, and extending internal to the loop spring.

In an alternate embodiment shown in FIG. 5, spring member 50b depicts the end portion 53a over or overlapping end portion 53b and the end portion 53b is depicted underneath end portion 53a such that the distal end 53a' faces to the left of the page and distal end 53b' faces to the right of the page, the latter end extending internal to the loop spring.

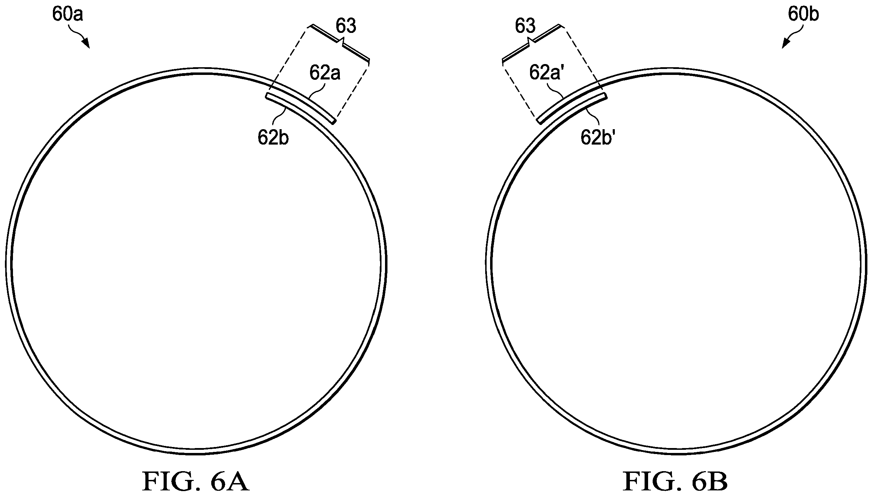

FIG. 6 depicts an alternate embodiment of spring members of the present invention. Spring member 60a includes end portions 62a and 62b that overlap forming an overlapping portion 63 which is smaller and offset to the right as compared to FIG. 1, whereas spring member 60b includes end portions 62a' and 62b' that overlap forming an overlapping portion 63 which is smaller and offset to the left as compared to FIG. 1. Though not shown as having a knob or notch, these spring member embodiments may also include one or more of these elements.

Thus, it is noted that the spring member of the present invention can be a loop shape with or without a protrusion, knob, or notch, and with overlapping end portions or distal ends such that the end portions or distal ends are not joined.

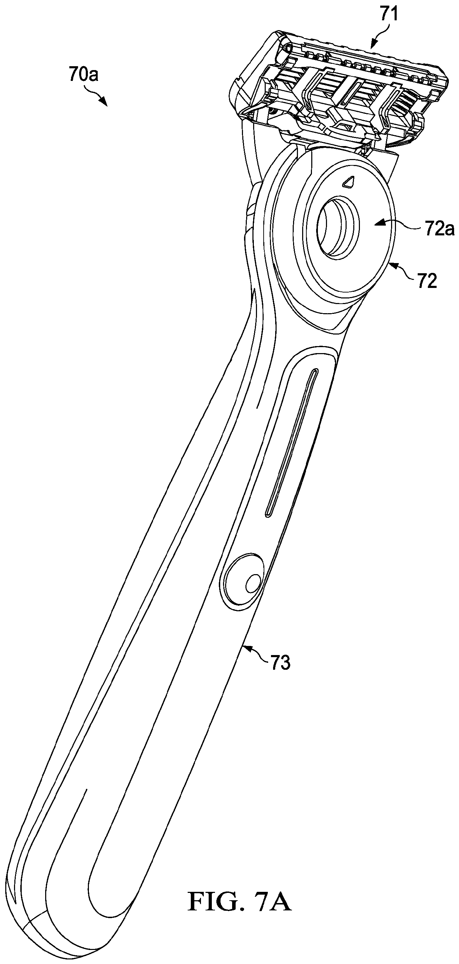

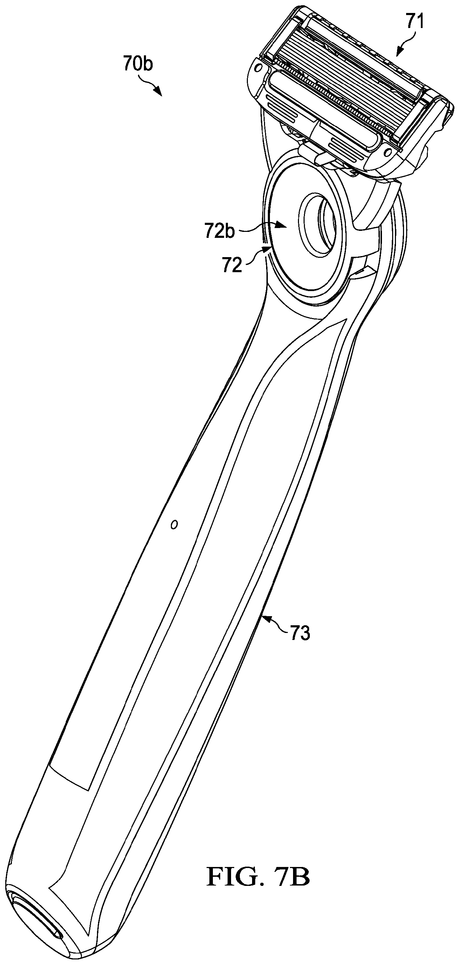

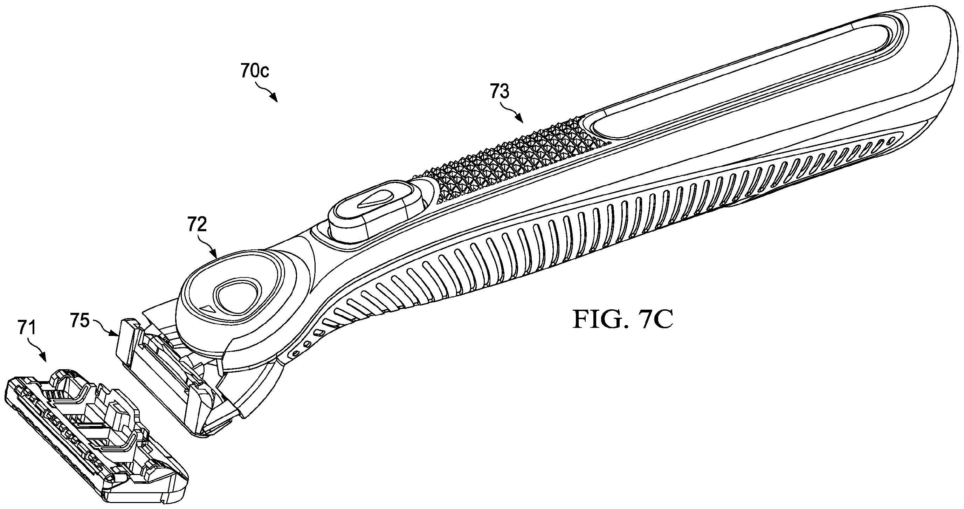

The spring member of the present invention, including a knob extending outwardly (such as the spring member 10 of FIG. 1), is incorporated into a razor 70 having a razor cartridge 71 and a razor handle 73 and a movable member assembly 72. A top view 70a of a 70 razor is shown having a first movable member assembly 72a while a bottom view 70b of a razor 70 is shown having a second movable member assembly 72b. The movable member assembly 72a may be coupled to the movable member assembly 72b forming one movable member assembly 72. A razor 70c having a cartridge 71 released or ejected from a handle 73 is shown in FIG. 7A. Also shown in FIG. 7A is a skin interconnect member 75 which can provide benefits to a user's skin and can pivot relative to the handle. The razors shown in FIGs. 7 and 7A may be the same razor or different razor. Exemplary razors, skin interconnect members, springs, and components thereof, are described in co-owned co-pending US Docket Nos. 15136P, 15137P, 15138P, 15162P, 15163P, 15164P, 15165P, 15166P, 15167P, 15169P, 15170P, 15181P, and 15182P.

The spring member is desirably incorporated into at least one portion of the movable member assembly 72, such as movable member assembly 72a or movable member assembly 72b.

The movable member assembly 72 of the razor 70 may preferably be comprised of a release or ejection mechanism, a pivot mechanism, or both mechanisms. The ejection mechanism may release or eject a cartridge from a razor handle. The pivot mechanism may provide a rotational or side-to-side motion of the cartridge relative to the handle. Details of the operation of the spring member assisting in the eject functionality (e.g., eject button) or pivot functionality (e.g., pivot member) will be described below.

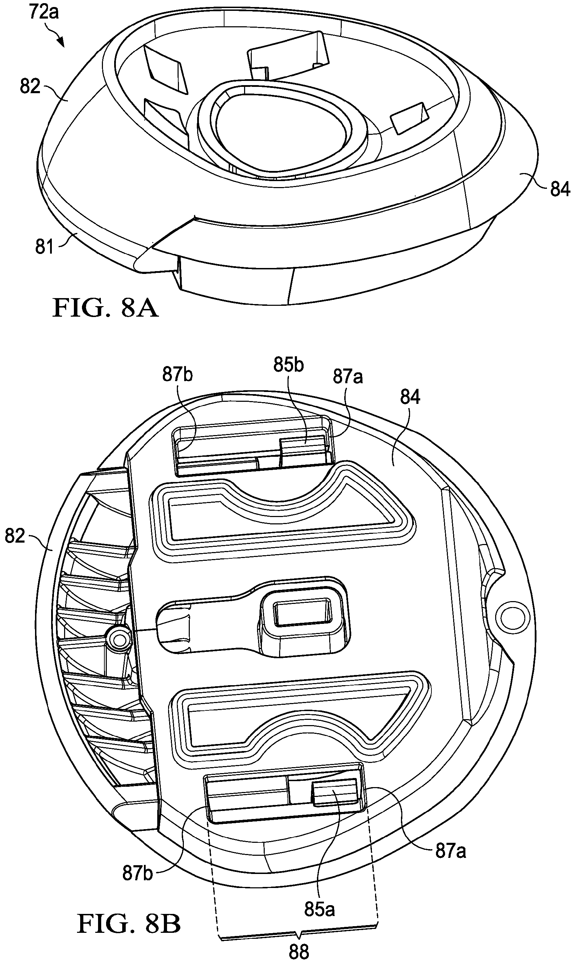

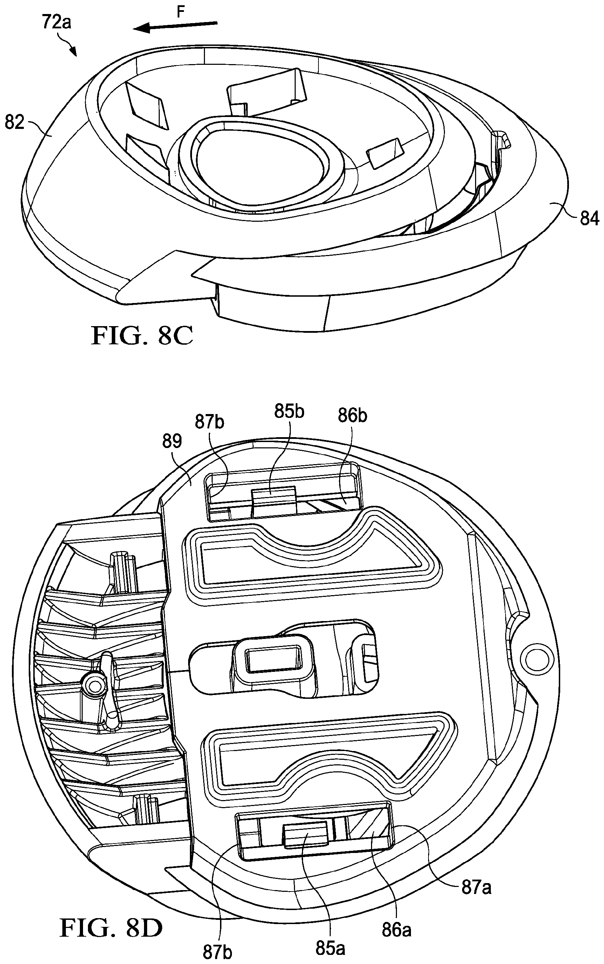

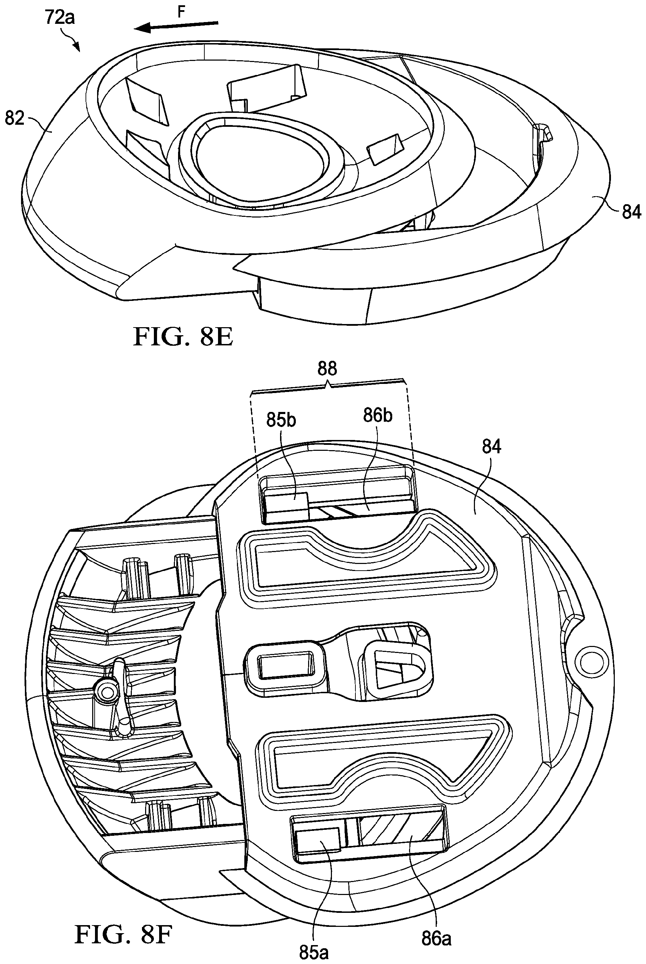

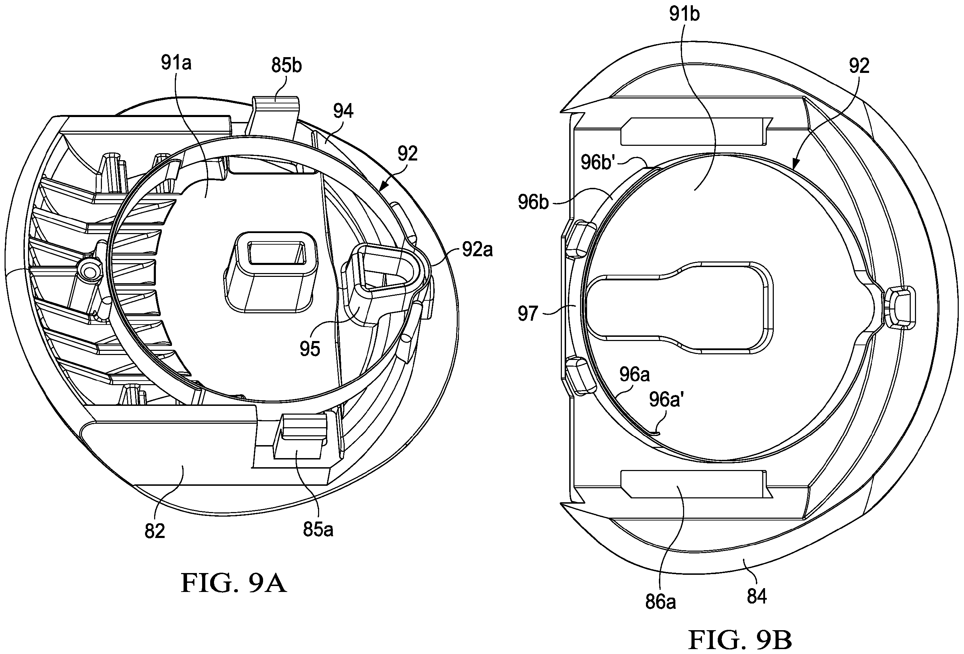

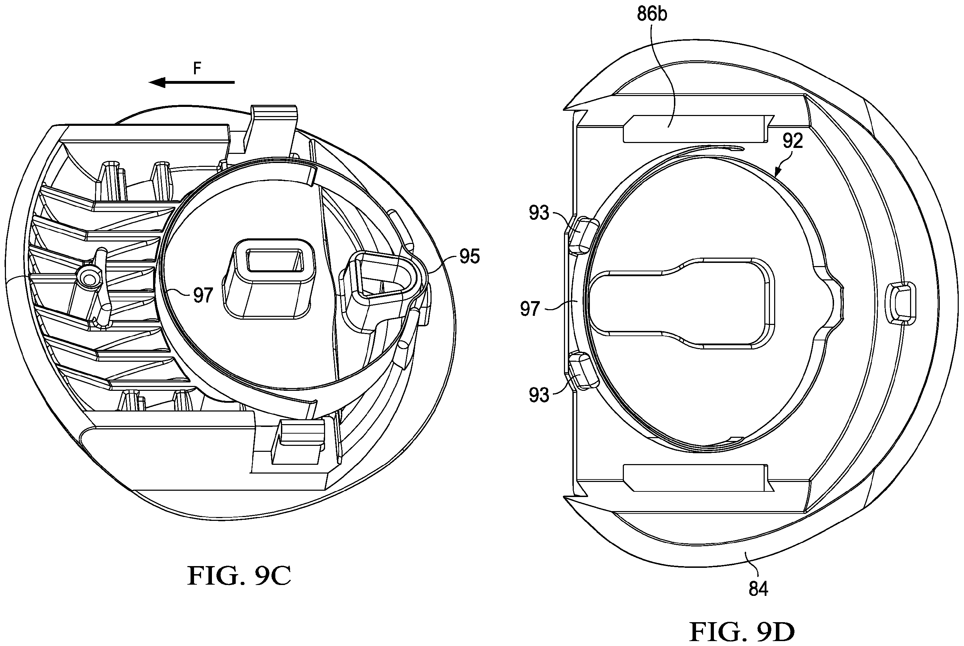

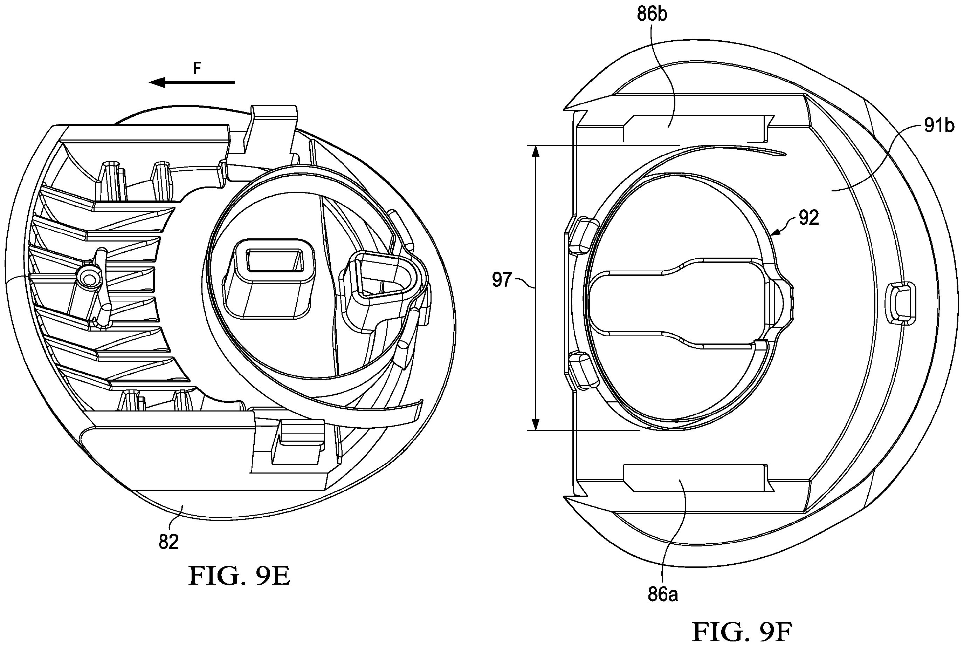

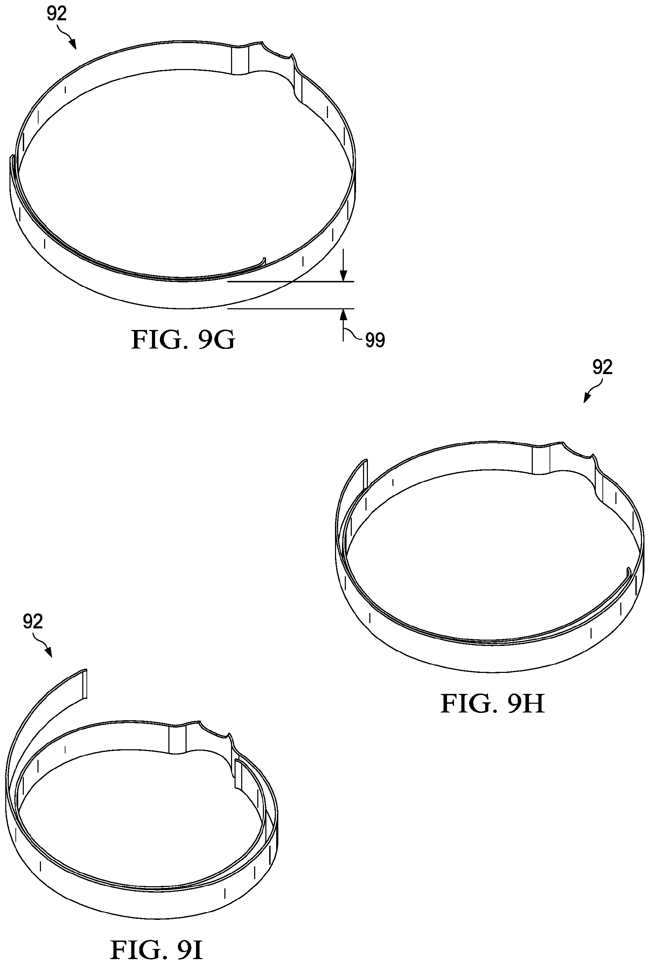

Turning first to FIGs. 8 and 9, the movable member assembly 72a comprises an eject button. The eject button comprises an upper portion 82 and a lower portion 84. Spring member 92 is disposed within the movable member assembly 72a as it is shown in FIG. 9. The eject button can be designed to travel forward (towards the cartridge) a long distance from about 2.5 mm to about 10 mm. The eject button can also be designed to travel backwards (away from the cartridge) a distance from 0.25 mm to about 5 mm. FIGs. 8 and 9 show an embodiment with a travel distance of 5 mm forward and 2 mm backwards.

FIG. 8 depicts the exterior surfaces of the upper and lower portions 82 and 84, respectively while FIG. 9 depicts the interior surfaces of the upper and lower portions 82 and 84, respectively. For instance, FIG. 9 depicts where and how the spring member 92 is generally disposed on the underside 91a of the upper portion 82 and where and how the same spring member would be disposed on the top side 91b of the lower portion 84. For clarity, the present invention contemplates preferably one loop spring member 92 in the eject button assembly 72a.

The eject button is pushed forward with a force from a rest position to a fully extended position. In the ejection mechanism of the present invention, the force is preferably the linear movement forward or the force required to push the eject button generally forward (e.g., typically with a user's finger). The linear movement path forward has the effect of pushing the upper portion 82 into the rear of the cartridge 71 thereby removing or separating the cartridge 71 from the handle 73. In the fully extended position, the cartridge 71 will be released from the handle 73. At this point, the total force F of the eject button 72a (e.g., upper portion 82) will be about 2.5 Newtons. The button will have traveled a distance forward (toward the rear of the cartridge) of about 5 mm.

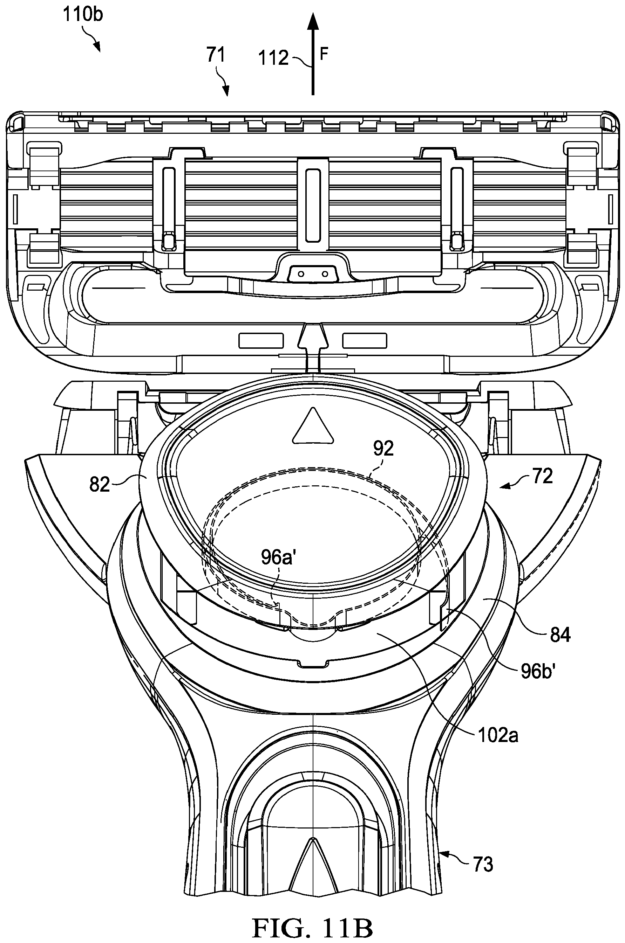

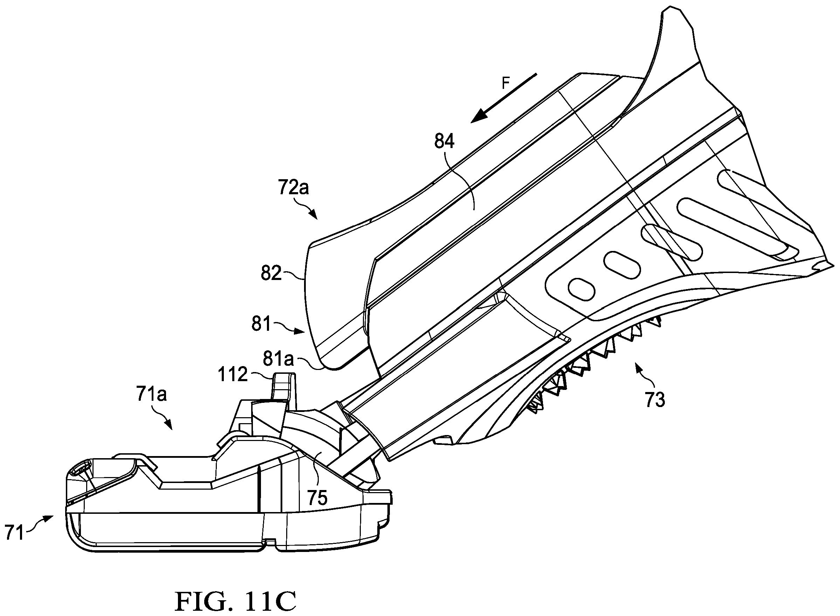

A nose is disposed on a portion of the movable member assembly. The nose may be a distance from about 3 mm to about 9 mm from a razor cartridge. In a non-limiting embodiment, a nose 81 can be disposed on the upper portion 82 as shown in FIG. 11c and will, under force F and along an eject plane, contact a surface on a rear side 71a of the cartridge, substantially in a center area 112 (as shown in FIGs. 11B and 11C) to eject the cartridge from the handle.

In a further non-limiting embodiment, nose 81 has a bevel 81a. Bevel 81a can be disposed at a distal end of the nose 81. The bevel can provide clearance for a pivotal movement of the type described herein for a razor cartridge 71 to the handle. The bevel can be angled upwards under the nose.

In FIGs. 8 and 9, top and bottom views of the movable member assembly 72a are shown at various stages. In FIGs. 8 and 9, Stages (A), (B), and (C) show exterior and interior views, respectively, of the eject button upper portion 82 as it travels forward vis-à-vis the lower portion 84. Stage (A) depicts the eject button 72a in a rest position, Stage (B) depicts the eject button 72a in a middle or half-way extended position, and Stage (C) depicts the eject button 72a as it would look in a fully extended position. As noted, the fully extended position can generally be up to about 10 mm in the present invention.

The bottom views of the travel path of the movable member assembly 72a are shown as well in FIG. 8. For instance, in a nonlimiting embodiment, the lower portion 84 is shown having two retaining features 85a and 85b which are disposed, extend into, and travel along or within corresponding slots 86a and 86b from the underside of the upper portion 82, respectively. The slots 86a and 86b guide the retaining features 85a and 85b in a direction of travel. Each slot is defined by a first wall 87a and a second wall 87b, the distance between which generally defines the travel path 88. The retaining features 85a and 85b serve to restrict the movement of the one or more portions (e.g., upper and lower portions) of the movable member assembly so that there is substantially little to no movement in a motion other than along the direction of travel. These features can align and keep the movable member assembly together by retaining the upper portion on the lower portion without the upper portion being too loose. The retaining features also assist in minimizing the potential rattling of one portion against the other in any stage.

At stage (A), the retaining features 85a and 85b of the upper portion are disposed at one end of the respective slots 86a and 86b, respectively. Preferably, each feature is disposed at a first wall 87a of the slots. At stage (B), as the upper portion 82 travels forward relative to the lower portion 84, the retaining features 85a and 85b are disposed in a central or middle section of the slots 86a and 86b, respectively. Further, at stage (C) as the upper portion 82 travels forward to its fully extended position, the retaining features 85a and 85b are disposed at the other end of the slots 86a and 86b, respectively where they cannot move any further as the slot wall 87b of each slot blocks further movement in the eject direction.

In one embodiment, the retaining features 85a and 85b comprise a hook like or undercut structure or may have any shape that assists in providing the retaining function. In one embodiment, the hook portion may protrude out from the underside of the upper portion and face towards an outer wall 89 of the movable member assembly. The term "undercut" or "undercut structure" signifies a feature having a shape, which when utilized in the practice of molding a part (e.g., injection molding a plastic part), results in some interference with the mold (e.g., shape of part will not allow it to readily separate or fall free); for instance, upon the opening or removal of the mold after formation of the part.

While the retaining features 85a and 85b are described as disposed on the upper portion 82 and the slots 86a and 86b are described as disposed on the lower portion 84, these features and slots can be arranged in an alternative embodiment of the present invention where the features and slots are swapped, such that the retaining features are disposed on the lower portion and the slots are disposed on the upper portion. The present invention contemplates any feasible arrangement to provide retention along a travel path for the movable member assembly.

Turning to FIG. 9, the interior of the eject button assembly 72a is depicted during stages (A), (B), and (C). Spring member 92 is a spring member of the present invention described herein and is disposed within a rail or track 94 on the underside 91 of the upper portion 82 as shown in FIG. 9). In one embodiment, spring member 92 is fully encompassed within eject button assembly 72a. The track 94 preferably has the same general shape as the spring member such that the spring member can be accommodated easily. Thus, as shown in FIG. 9, track 94 takes on a circular or loop shape to accommodate the loop shaped spring member.

Spring member 92 has a knob 92a and the track 94 or the underside 91 of the upper portion comprises one or more mounting structures 95 with a shape to accommodate the knob 92a. The shape of at least one of the structures 95 is desirably substantially curved or circular such that the curved profile of the retarding structure knob 92a can be disposed flush around a curved portion of the outer surface of the structure 95 as shown in FIG. 9. The mounting structure 95 can serve to limit or control movement of the spring member 92. Other structures 95 present may generally provide a resting surface or wall.

Loop spring member 92 may or may not be permanently attached to the upper portion 82, the lower portion 84, or any other portion of the movable member assembly. Preferably, the spring member is not permanently secured, mounted or attached to any portion of the assembly such that it is lies on or within but is generally capable of moving within the circular track 94. For instance, if a portion containing the spring member were tipped upside down, the spring member 92 may desirably be loose or fall out of the lower portion relatively easily or be able to be lifted out of the track with one's fingers.

It should be noted that mounting structure 95 and the knob 92a of the spring member serve to retard or prevent the spring member 92 from spinning around and losing position within the track 94 which may negatively affect the functionality of the spring member 92. The mounting structure 95 is intended to keep the spring member in the same orientation throughout operation.

Turning to FIG. 9, internal views of the upper and lower portions 82 and 84 showing underside surfaces 91a and 91b, respectively, of the movable member assembly 72a are shown including a top view of spring member 92, knob 92a as it is disposed within an upper portion 82 on the track 94. FIG. 9 depicts how the spring member changes within the eject button during the stages of ejection when a force is exerted. While spring member 92 is disposed in a portion (e.g., track) of an upper portion 82 of the eject button assembly 72a, the present invention contemplates that the spring member 92 may also be disposed in the lower portion 84 or if the upper and lower portion are integrated then the spring may be disposed within an upper portion and a lower portion of the eject button assembly 72a. As shown, the spring member 92 is disposed within the upper portion 82 but contacts the lower portion (e.g., as depicted in FIG. 9 on surface 91b). The lower portion may have any number of pieces. Thus, either an upper, lower, or any or all portions thereof of the movable member assembly may desirably include a track, rails, or other structural features, within which the spring member 92 is contained and moves within. It is further contemplated in the present invention that the lower portion comprise a movable member and the upper portion be fixed relative to the handle. Extending from surface 91b of the lower portion 84 are two guide support structures 93 provided along the outer periphery of spring member 92 or track 94 (shown in FIG. 9).

The additional guide support structures 93 are desirably disposed proximal to the overlapping portion 97 of the end portions 96a and 96b and distal ends 96a' and 96b' respectively. In this way, the support structures 93 serve to keep the loop spring or its end portions from extending outward from the track or from losing shape or orientation.

As noted above, the spring member 92 is desirably not permanently fixed within lower portion as discussed above. The spring member 92 of the present invention is preferably in a preloaded, slightly compressed position at stage (A) of FIG. 9. This state is considered a neutral or at rest position such as when a razor is fully formed or assembled and/or ready for use. As depicted, spring member 92 has a generally circular shape at stage (A).

Also contemplated in the present invention is a spring member 92 in any other feasible position in the rest state, (e.g., not in a preloaded, compressed position). The pre-loaded, tension arrangement provides a further advantage in that it assists in eliminating rattling or other noises that may be present in a fully assembled razor. With a spring member not under tension, the spring member may be moving around (e.g., due to the fact it is not permanently attached to the eject button portions). The overlapping portion 97 of the end portions 96a and 96b and distal ends 96a' and 96b' of the spring member 92 may be analogous any of the overlapping end portion arrangements described herein. The distal ends 96a' and 96b' are desirably not fixed to any structure in the movable member assembly, are generally unsupported, and can be free ends.

A spring member inside the eject button under a force F is shown at stage (B) and stage (C). At stage (B) the spring member 92 is initially compressed from its original rest state as a linear force F is applied. The end portions 96a and 96b and free distal ends 96a' and 96b' of the spring member 92 move down and around, along the outer and inner periphery of the spring member 92. In one embodiment, the overlapping end portion 96b that was initially disposed outside the periphery of the spring member 92 moves down along the outer periphery of the spring member 92 as shown in stage (B) at surface 91b of FIG. 9 while the other end portion 96a that was internal to the periphery moves along the inside of the spring member 92 as it is compressed.

At stage (C), as additional force F is applied, the button is in its fully extended position as described in conjunction with FIG. 8. At stage (C), the spring member 92 (which is shown from both upper and lower portion vantage points) is formed or compressed into an elongated or flattened oval shape. In contrast, when stretched out or in the rest position at stage (A), the spring member has a more circular shape.

FIG. 9A depicts the structure of the spring members in stages (A), (B), and (C) of FIG. 9. As spring member 92 is compressed during the linear movement forward, the extent of the overlapping portion 97 of spring member 92 is increased, as can be seen in the difference in the overlapping portion size from that of the neutral or rest state at stage (A) in FIG. 9A to the further compressed state at stage (C) of FIG. 9A. In one embodiment, the size of the overlapping portion 97 of spring member 92 substantially doubles as the eject button is moved linearly forward. In an embodiment the end portions and distal ends move far enough along the left and right sides of the spring member 92 to approach the knob 92a of the spring member 92.

A width or height 99 of the spring member 92 is also shown in FIG. 9A. Desirably, the height 96 of the spring member of the present invention ranges from about 1.00 mm to about 4 mm, and preferably about 1.7 mm. In a non-limiting preferred embodiment of the invention, the height 99 of the spring member is uniform throughout the loop. The thickness 98 of the spring member 92 is about 0.1 mm.

The direction of the force F is shown in FIGs. 8 and 9 by the arrows F. In one embodiment of the present invention, the force F that the eject assembly undergoes to release a cartridge from a handle is about 5 Newtons. A travel distance comprises a linear movement forward or backwards along a longitudinal axis. In one embodiment, the travel distance can be about 5mm in the direction of the force. A force per unit travel of the travel distance without ejecting the cartridge can be from about 0.3 Newtons per mm to about 1 Newtons per mm and preferably about 0.7 Newtons per mm. Higher forces per unit travel may ensure that the eject button assembly can robustly return to its original position while lower forces per return can provide consumer acceptable operation while ejecting the cartridge (e.g. large fraction of force can be dedicated to cartridge eject versus overcoming eject button spring).

Additionally, in another embodiment, the present invention contemplates that the eject button assembly 72a can travel in a backwards direction from the rest position at stage (A). The eject button assembly may travel in a direction opposite the forward direction (e.g., the direction to release a cartridge) if the razor is accidentally dropped and the button assembly is unavoidably forcibly pushed rearward. Under a drop situation, the force may be about 20N in the drop direction and it may be about 10 N for a user to get back into the position of stage (A).

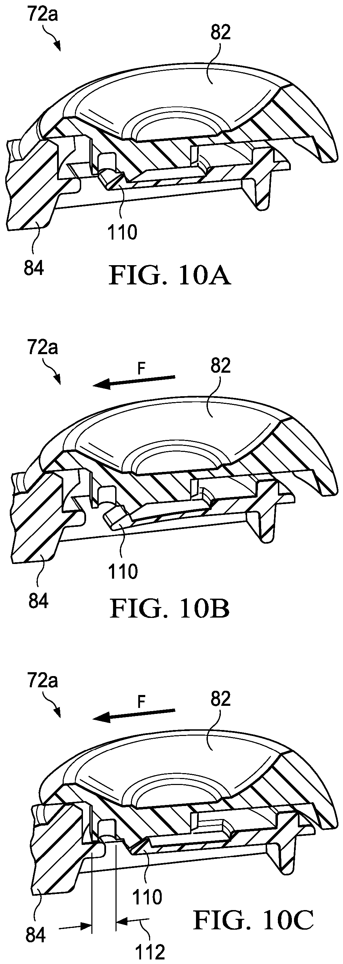

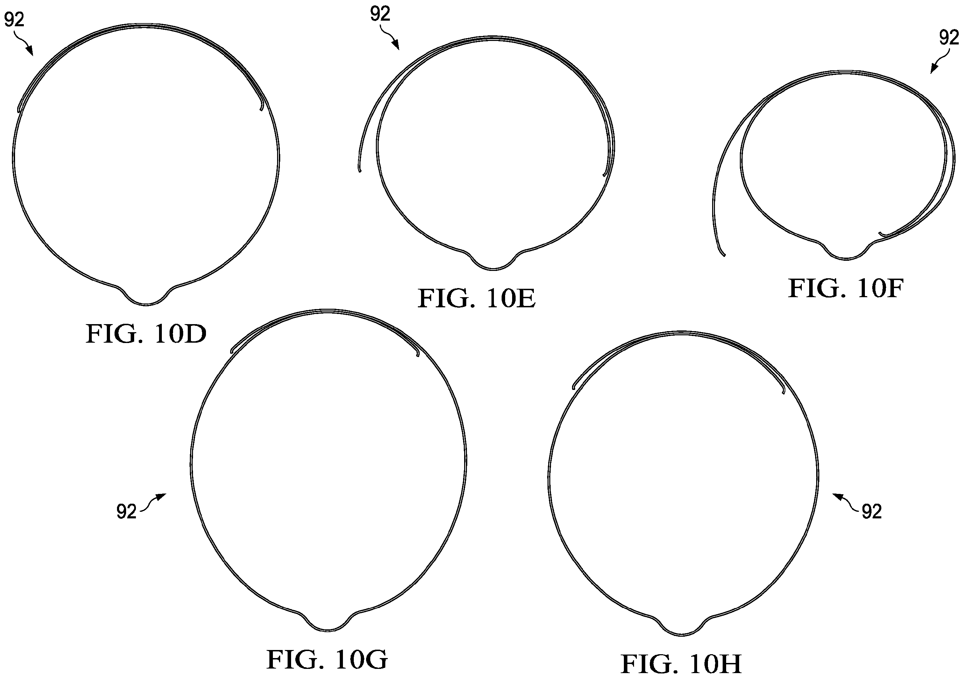

Turning to FIG. 10, the button assembly or a portion thereof, can travel about 2 to 2.5 mm backwards as shown from the initial rest position at stage (A), to intermediate stage (D) and to final stage (E). The direction of force F is shown by the arrow in FIG. 10. Stage (D) represents the assembly having moved midway of the backward travel path of about 1.5 mm while Stage (E) represents the button fully extended in the opposite travel direction of eject (e.g., about 2.5 mm back toward the handle). A stop 110 may be included in the button assembly to preload the spring and prevent the button assembly inclusive of the spring from rattling in the rest position. Additionally, the stop 110 may serve to dampen or mitigate any damage to the button assembly, as it may function as a bumper or stop along the backwards travel path in the event of an accidental drop.

In one embodiment, the stop 110 may provide a compression preload force which is about 0.25 Newtons to about 0.75 Newtons, and preferably about 0.32 Newtons while also preventing the button from traveling backwards. To travel backwards, the button can travel over the side of stop 110 with a steep slope and the force to overcome the stop is about 20 Newtons. This allows the button to move out of the way during accidental drops without causing damage. The side of the stop 110 with a gradual slope provides a low enough force of about 10 Newtons to allow the consumer to put the button back in the rest position. In this way, the button does not get stuck or damaged. It should be noted that while at stage (A), the spring member 92 is the same as described with respect to cartridge ejection, during the backwards movement of the assembly, the spring member 92 will become larger or elongate and the overlapping portion will be reduced as shown in FIG. 10A, first at intermediate stage (D), then more so at final stage (E) as compared to the spring member at stages (B) and (C) as shown in FIG. 10A.

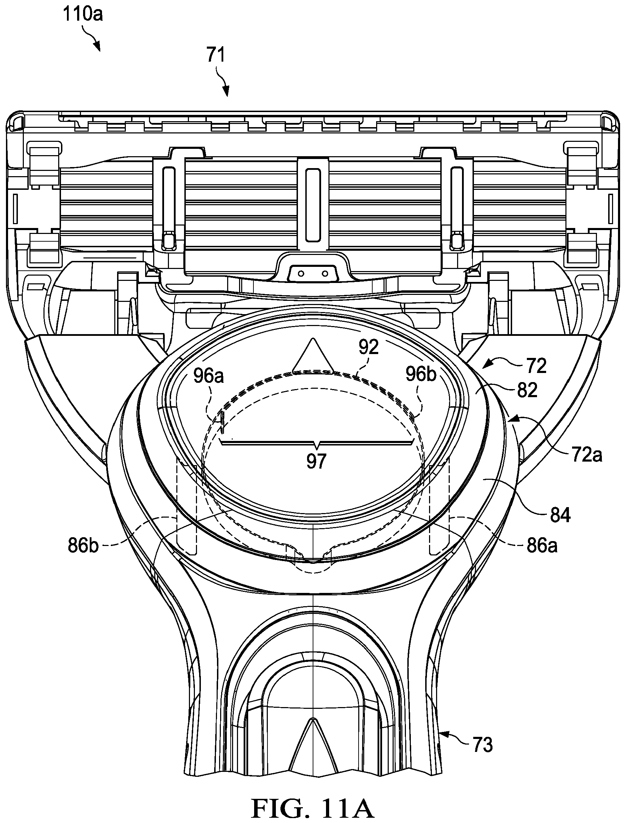

Turning to FIG. 11A, a schematic semi-transparent top view of a razor 110b is shown having an eject button assembly 72 with a spring member 92 disposed therein. The spring member 92 may be a part of the razor cartridge 71 or a part of the razor handle 73 or both. As depicted in FIG. 11A, the eject button 72 is disposed as part of the proximal end of a razor handle 73.

Spring member 92 is shown disposed in the eject button assembly 72a. The tracks 94 may be disposed within an upper portion 82 and/or a lower portion 84 of the movable member assembly or the eject button 72. As shown, the spring member 92 is disposed within the upper portion 82 but contacts the lower portion 84 as well.

Turning to FIG. 11B, a schematic semi-transparent view of a razor 110b is shown having eject button assembly 72 of FIG. 11A (with spring member 92) under a force F is shown. In the ejection mechanism of the present invention, the force F as shown by the arrow in FIG. 11B is preferably the linear movement forward or the force when the eject button is pushed forward (e.g., typically with a user's finger). The linear movement forward has the effect of pushing the upper portion 82 into the rear of the cartridge 71 as shown in FIG. 11B thereby removing or separating the cartridge 71 from the handle 73. As the force is applied, in one embodiment of the invention, the upper portion 82 of the assembly 72 moves along the tracks 86a and 86b and the spring member 92 is further compressed from its original state (e.g., stage (A)). The end portions 96a and 96b and distal ends 96a' and 96b' of the spring member 92 move down along the inner and outer periphery, respectively of the spring member 92 as shown in FIG. 11A and as described and shown with regards to FIGs. 9 and 9A (e.g., at stage (C)).

As noted above, a spring member of the present invention may assist in the operation of the pivot functionality. The spring member may be disposed within a pivot member which can have one or more movable members. The pivot functionality may pivot the razor cartridge relative to the handle along a number of axes in the pitch, yaw or roll motions. A razor contemplated in the present invention is described in co-owned, co-pending US Docket Nos. 15139P, 15155P, 15156P, 15159P, 15177PQ, 15178PQ, 15179P, and 15180PQ.

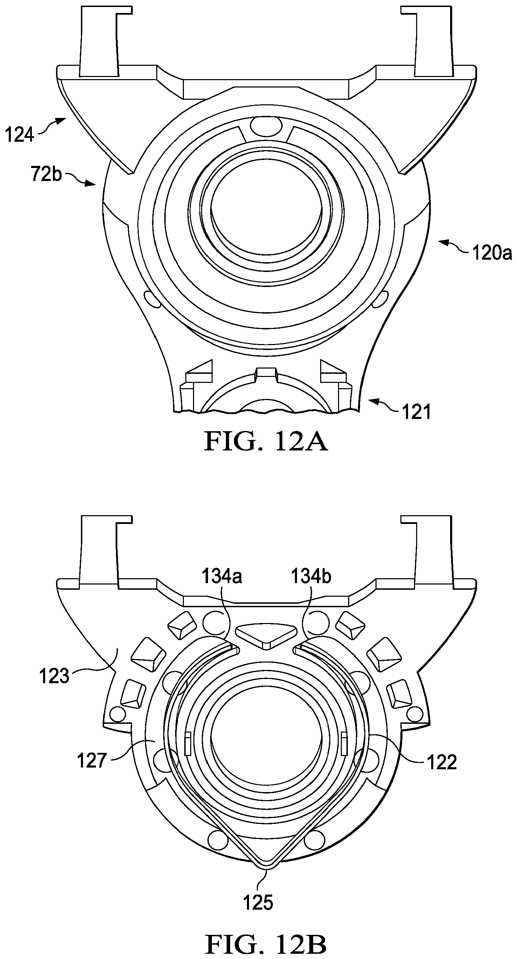

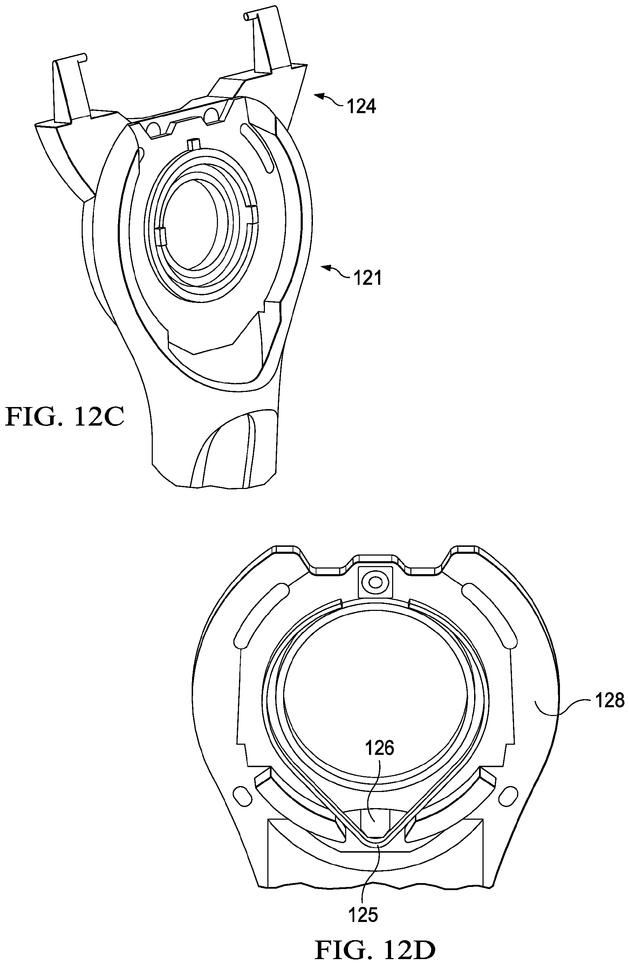

An exemplary second movable member assembly 72b of the present invention is shown in FIG. 12. The exemplary assembly 72b can be disposed as shown in the bottom view of the razor in FIG. 7. The second movable member assembly 72b is comprised of a pivot member 124 and is joined to a portion of the handle 121 such as the main body or frame of the handle as shown in FIG. 12 view (A). FIG. 12, view B depicts a tear drop shaped loop spring member 122 (e.g., FIG. 3) disposed in the pivot member 124. Spring member 122 can be mounted to the handle frame 121 or to an underside surface 123 of the pivot member 124. Spring member 122 will sit and move relatively freely within a track 127 on the underside surface 123 of the pivot member 124 as shown in FIG. 12 view (B). Distal ends of the spring member 122 will contact stop walls 134a and 134b of the track. In one embodiment, assembly 120a is in a neutral or rest position as shown in FIG. 12 (A). In one embodiment, spring member 122 is fully encompassed within pivot member 124 (e.g., disposed entirely internal to assembly 72b). Pivot member 124 may comprise one or more portions. As shown in FIG. 12, view (C), the handle frame 121 is joined to the pivot member 124. In FIG. 12, view (D), spring member 122 is mounted to the inner surface 128 of the frame 121 such that the knob or notch 125 of the spring member 122 is disposed around one or more protuberances 126 on the inner surface 128 of the handle frame 121. Inner surface 128 and underside surface 123 of FIG. 12 views (B) and (D) will mate and sandwich together with the spring member 122 inside to mount the pivot member to the handle shown in FIG. 12 views (A) and (D). This assembly will provide rotational pivot functionality for the razor.

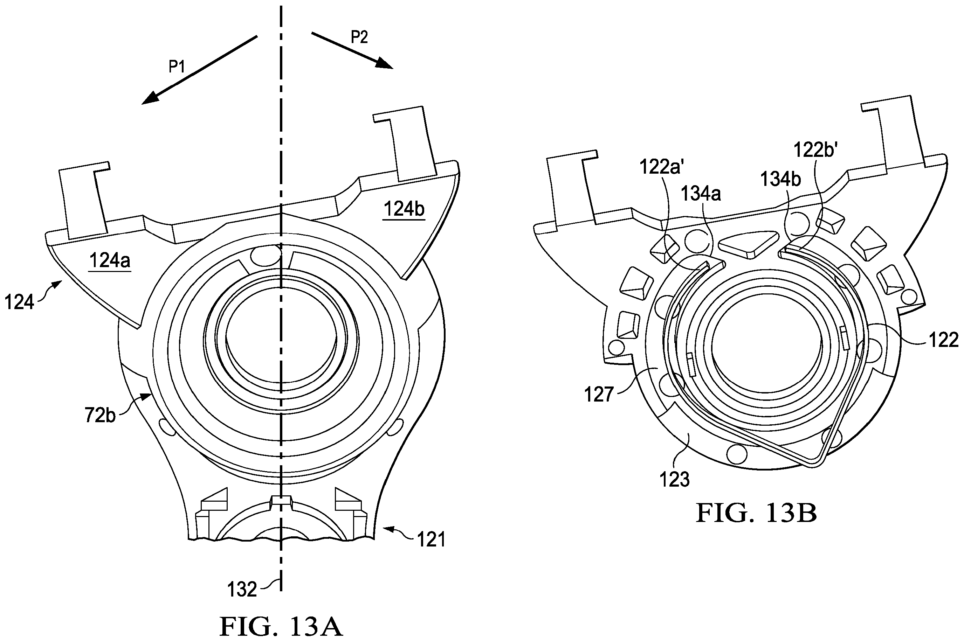

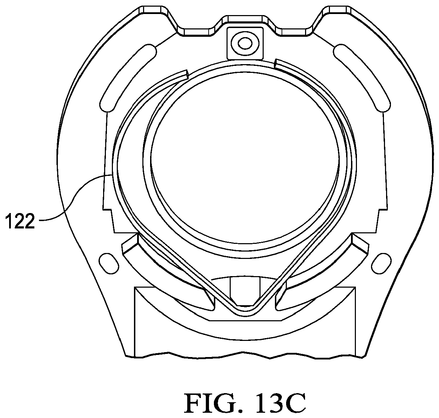

FIG. 13 schematically depicts the movement of the pivot member 124 of the razor cartridge relative to the handle 73. As shown in view (A) of FIG. 13, the razor can pivot from centerline 132 in one or more directions (e.g., side to side) about pivot angle P1 and/or P2. In a non-limiting embodiment of the present invention, P1 can be about 12.5 degrees and P2 can be about 12.5 degrees. Thus, the pivot member 124 can provide a combined range of rotational motion of about 25 degrees. Arms 124a and 124b of the pivot member are directly or indirectly connected to a razor cartridge 71 (e.g., FIG. 7). Thus, when the pivot member 124 moves, the cartridge can move accordingly. Spring member 122 will be disposed and move relatively freely within a track 127 on the underside surface 123 of the pivot member 124 as shown in FIG. 12 view (B) and FIG. 13 view (B). Distal ends 122a' and 122b' are not permanently mounted to the frame 121 or the pivot member 124. As shown in FIG. 13 in view (B) a pivot in one direction (e.g., to the left) is shown. In this pivot movement, the distal end 122a' of the spring member 122 moves away from contacting one of the stop walls 134a of the track 127. Though not shown, when the razor pivot member moves about angle P2, distal end 122b' of the spring member 122 moves away from contacting the opposite stop wall 134b of the track 127. FIG. 13 view (C) depicts the inner surface 128 of the frame 121 during a pivot movement. In one embodiment, spring member 122 deforms slightly more on one side than on the other during the pivot or rotational movement about angle P1 (shown in view (A) and (B)). As noted above, the first and second movable member assemblies 72a and 72b of the present invention may be joined together to form an integral unit as shown in FIG. 7. The assemblies can be joined together through the handle frame 121.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A razor (70) comprising
a cartridge (71);
a handle (73) coupled to said cartridge (71);
a loop shaped spring member (10, 30a, 30b, 38, 40a, 40b, 40c, 50a, 50b, 60a, 60b, 92, 122, 124) disposed in an assembly (72, 72a, 72b), said assembly (72, 72a, 72b) having one or more movable portions (72a, 72b), said one or more movable portions (72a, 72b) providing an angular rotation of said handle (73) to said cartridge (71),
**characterized in that**
said loop shaped spring member (10, 30a, 30b, 38, 40a, 40b, 40c, 50a, 50b, 60a, 60b, 92, 122, 124) has overlapping end portions (53b).

2. The razor (70) of claim 1 wherein said cartridge (71) and said handle (73) pivot relative to each other.

3. The razor (70) of claim 1 or 2 wherein said loop shaped spring member (10, 30a, 30b, 38, 40a, 40b, 40c, 50a, 50b, 60a, 60b, 92, 122, 124) comprises an oval, circle, elliptical, ring shape, modified V-shape, tear drop shape, or any combination thereof.

4. The razor (70) of any of the preceding claims wherein said loop shaped spring member (10, 30a, 30b, 38, 40a, 40b, 40c, 50a, 50b, 60a, 60b, 92, 122, 124) has an overall length of about 30 mm to about 90 mm when straightened.

5. The razor (70) of any of the preceding claims wherein said loop shaped spring member (10, 30a, 30b, 38, 40a, 40b, 40c, 50a, 50b, 60a, 60b, 92, 122, 124) has radii of curvature between about 1 mm to about 12 mm.

6. The razor (70) of any of the preceding claims wherein distal ends (12a', 12b', 32a', 32b', 34a', 34b', 42a', 42b', 52a', 52b', 53a', 53b', 96a' 96b', 122a', 122b) of said loop shaped spring member (10, 30a, 30b, 38, 40a, 40b, 40c, 50a, 50b, 60a, 60b, 92, 122, 124) are spaced apart.

7. The razor (70) of any of the preceding claims wherein first and second distal ends of said loop shaped spring member (10, 30a, 30b, 38, 40a, 40b, 40c, 50a, 50b, 60a, 60b, 92, 122, 124) contact first and second stop walls of said assembly when said assembly (72, 72a, 72b) is in a rest position.

8. The razor (70) of any of the preceding claims wherein one or both distal ends of said loop shaped spring member (10, 30a, 30b, 38, 40a, 40b, 40c, 50a, 50b, 60a, 60b, 92, 122, 124) move away from one or more stop walls of said assembly (72, 72a, 72b) during said angular rotation.

9. The razor (70) of any of the preceding claims wherein said angular rotation is up to 30 degrees from a center of said assembly (72, 72a, 72b).

10. The razor (70) of any of the preceding claims wherein a stiffness coefficient of said angular rotation about an axis of rotation is about 0.0833 Nmm/degree.

11. The razor (70) of any of the preceding claims wherein said loop shaped spring member (10, 30a, 30b, 38, 40a, 40b, 40c, 50a, 50b, 60a, 60b, 92, 122, 124) is fully encompassed within said assembly (72, 72a, 72b).

12. The razor (70) of any of the preceding claims further comprising a skin interconnect member (75).

13. The razor (70) of any of the preceding claims wherein said loop shaped spring member (10, 30a, 30b, 38, 40a, 40b, 40c, 50a, 50b, 60a, 60b, 92, 122, 124) is comprised of a stainless steel.

14. The razor (70) of any of the preceding claims wherein said loop shaped spring member (10, 30a, 30b, 38, 40a, 40b, 40c, 50a, 50b, 60a, 60b, 92, 122, 124) is comprised of flat wire.

## Patentansprüche

1. Rasierer (70), umfassend
eine Kartusche (71);
einen Griff (73), der mit der Kartusche (71) gekoppelt ist;
ein schlaufenförmiges Federelement (10, 30a, 30b, 38, 40a, 40b, 40c, 50a, 50b, 60a, 60b, 92, 122, 124), das in einer Anordnung (72, 72a, 72b) angeordnet ist, wobei die Anordnung (72, 72a, 72b) einen oder mehrere bewegliche Abschnitte (72a, 72b) aufweist, wobei der eine oder die mehreren beweglichen Abschnitte (72a, 72b) eine Winkeldrehung des Griffs (73) zu der Kartusche (71) bereitstellt, **dadurch gekennzeichnet, dass** das schlaufenförmige Federelement (10, 30a, 30b, 38, 40a, 40b, 40c, 50a, 50b, 60a, 60b, 92, 122, 124) überlappende Endabschnitte (53b) aufweist.

2. Rasierer (70) nach Anspruch 1, wobei die Kartusche (71) und der Griff (73) relativ zueinander schwenken.

3. Rasierer (70) nach Anspruch 1 oder 2, wobei das schlaufenförmige Federelement (10, 30a, 30b, 38, 40a, 40b, 40c, 50a, 50b, 60a, 60b, 92, 122, 124) eine ovale, kreisförmige, elliptische, ringförmige Form, modifizierte V-Form, Tränenform oder eine beliebige Kombination davon umfasst.

4. Rasierer (70) nach einem der vorstehenden Ansprüche, wobei das schlaufenförmige Federelement (10, 30a, 30b, 38, 40a, 40b, 40c, 50a, 50b, 60a, 60b, 92, 122, 124) eine Gesamtlänge von etwa 30 mm bis etwa 90 mm aufweist, wenn es geradegerichtet ist.

5. Rasierer (70) nach einem der vorstehenden Ansprüche, wobei das schlaufenförmige Federelement (10, 30a, 30b, 38, 40a, 40b, 40c, 50a, 50b, 60a, 60b, 92, 122, 124) Krümmungsradien zwischen etwa 1 mm bis etwa 12 mm aufweist.

6. Rasierer (70) nach einem der vorstehenden Ansprüche, wobei distale Enden (12a', 12b', 32a', 32b', 34a', 34b' 42a', 42b', 52a', 52b', 53a', 53b', 96a' 96b', 122a', 122b') des schlaufenförmigen Federelements (10, 30a, 30b, 38, 40a, 40b, 40c, 50a, 50b, 60a, 60b, 92, 122, 124) voneinander beabstandet sind.

7. Rasierer (70) nach einem der vorstehenden Ansprüche, wobei erste und zweite distale Enden des schlaufenförmigen Federelements (10, 30a, 30b, 38, 40a, 40b, 40c, 50a, 50b, 60a, 60b, 92, 122, 124) erste und zweite Anschlagwände der Anordnung berühren, wenn sich die Anordnung (72, 72a, 72b) in einer Ruhestellung befindet.

8. Rasierer (70) nach einem der vorstehenden Ansprüche, wobei sich eines oder beide distalen Enden des schlaufenförmigen Federelements (10, 30a, 30b, 38, 40a, 40b, 40c, 50a, 50b, 60a, 60b, 92, 122, 124) während der Winkeldrehung von einer oder mehreren Anschlagwänden der Anordnung (72, 72a, 72b) weg bewegen.

9. Rasierer (70) nach einem der vorstehenden Ansprüche, wobei die Winkeldrehung bis zu 30 Grad von einer Mitte der Anordnung (72, 72a, 72b) beträgt.

10. Rasierer (70) nach einem der vorstehenden Ansprüche, wobei ein Steifigkeitskoeffizient der Winkeldrehung um eine Drehachse etwa 0,0833 Nmm/Grad beträgt.

11. Rasierer (70) nach einem der vorstehenden Ansprüche, wobei das schlaufenförmige Federelement (10, 30a, 30b, 38, 40a, 40b, 40c, 50a, 50b, 60a, 60b, 92, 122, 124) vollständig in der Anordnung (72, 72a, 72b) eingeschlossen ist.

12. Rasierer (70) nach einem der vorstehenden Ansprüche, ferner umfassend ein Hautverbindungselement (75).

13. Rasierer (70) nach einem der vorstehenden Ansprüche, wobei das schlaufenförmige Federelement (10, 30a, 30b, 38, 40a, 40b, 40c, 50a, 50b, 60a, 60b, 92, 122, 124) aus einem Edelstahl besteht.

14. Rasierer (70) nach einem der vorstehenden Ansprüche, wobei das schlaufenförmige Federelement (10, 30a, 30b, 38, 40a, 40b, 40c, 50a, 50b, 60a, 60b, 92, 122, 124) aus Flachdraht besteht.

## Revendications

1. Rasoir (70) comprenant
une cartouche (71) ;
une poignée (73) couplée à ladite cartouche (71) ;
un élément de ressort en forme de boucle (10, 30a, 30b, 38, 40a, 40b, 40c, 50a, 50b, 60a, 60b, 92, 122, 124) disposé dans un ensemble (72, 72a, 72b), ledit ensemble (72, 72a, 72b) ayant une ou plusieurs parties mobiles (72a, 72b), lesdites une ou plusieurs parties mobiles (72a, 72b) fournissant une rotation angulaire de ladite poignée (73) par rapport à ladite cartouche (71), **caractérisé en ce que** ledit élément de ressort en forme de boucle (10, 30a, 30b, 38, 40a, 40b, 40c, 50a, 50b, 60a, 60b, 92, 122, 124) a des parties d'extrémité (53b) qui se chevauchent.

2. Rasoir (70) selon la revendication 1 dans lequel ladite cartouche (71) et ladite poignée (73) pivotent l'une par rapport à l'autre.

3. Rasoir (70) selon la revendication 1 ou 2 dans lequel ledit élément de ressort en forme de boucle (10, 30a, 30b, 38, 40a, 40b, 40c, 50a, 50b, 60a, 60b, 92, 122, 124) comprend une forme ovale, circulaire, elliptique, annulaire, en V modifiée, en forme de goutte, ou toute combinaison de ceux-ci.

4. Rasoir (70) selon l'une quelconque des revendications précédentes dans lequel ledit élément de ressort en forme de boucle (10, 30a, 30b, 38, 40a, 40b, 40c, 50a, 50b, 60a, 60b, 92, 122, 124) a une longueur totale d'environ 30 mm à environ 90 mm lorsqu'il est redressé.

5. Rasoir (70) selon l'une quelconque des revendications précédentes dans lequel ledit élément de ressort en forme de boucle (10, 30a, 30b, 38, 40a, 40b, 40c, 50a, 50b, 60a, 60b, 92, 122, 124) a des rayons de courbure compris entre environ 1 mm et environ 12 mm.

6. Rasoir (70) selon l'une quelconque des revendications précédentes dans lequel des extrémités distales (12a', 12b', 32a', 32b', 34a', 34b', 42a', 42b', 52a', 52b', 53a', 53b', 96a' 96b', 122a', 122b') dudit élément de ressort en forme de boucle (10, 30a, 30b, 38, 40a, 40b, 40c, 50a, 50b, 60a, 60b, 92, 122, 124) sont espacées.

7. Rasoir (70) selon l'une quelconque des revendications précédentes dans lequel des première et deuxième extrémités distales dudit élément de ressort en forme de boucle (10, 30a, 30b, 38, 40a, 40b, 40c, 50a, 50b, 60a, 60b, 92, 122, 124) sont en contact avec des première et deuxième parois d'arrêt dudit ensemble lorsque ledit ensemble (72, 72a, 72b) est dans une position de repos.

8. Rasoir (70) selon l'une quelconque des revendications précédentes dans lequel une ou les deux extrémités distales dudit élément de ressort en forme de boucle (10, 30a, 30b, 38, 40a, 40b, 40c, 50a, 50b, 60a, 60b, 92, 122, 124) s'écartent d'une ou plusieurs parois d'arrêt dudit ensemble (72, 72a, 72b) pendant ladite rotation angulaire.

9. Rasoir (70) selon l'une quelconque des revendications précédentes dans lequel ladite rotation angulaire peut atteindre 30 degrés depuis un centre dudit ensemble (72, 72a, 72b).

10. Rasoir (70) selon l'une quelconque des revendications précédentes dans lequel un coefficient de raideur de ladite rotation angulaire autour d'un axe de rotation est d'environ 0,0833 N-mm/degré.

11. Rasoir (70) selon l'une quelconque des revendications précédentes dans lequel ledit élément de ressort en forme de boucle (10, 30a, 30b, 38, 40a, 40b, 40c, 50a, 50b, 60a, 60b, 92, 122, 124) est entièrement englobé dans ledit ensemble (72, 72a, 72b).

12. Rasoir (70) selon l'une quelconque des revendications précédentes comprenant en outre un élément d'interconnexion de peau (75).

13. Rasoir (70) selon l'une quelconque des revendications précédentes dans lequel ledit élément de ressort en forme de boucle (10, 30a, 30b, 38, 40a, 40b, 40c, 50a, 50b, 60a, 60b, 92, 122, 124) est constitué d'un acier inoxydable.

14. Rasoir (70) selon l'une quelconque des revendications précédentes dans lequel ledit élément de ressort en forme de boucle (10, 30a, 30b, 38, 40a, 40b, 40c, 50a, 50b, 60a, 60b, 92, 122, 124) est constitué de fil plat.
